# EUROPEAN PATENT APPLICATION

(11) **EP 4 155 270 A1**
(43) Date of publication of application: **29.03.2023**
(21) Application number: 21809613.9
(22) Date of filing: 19.05.2021
(51) Int. Cl.: C01G 53/00, H01M 4/36, H01M 4/525

(54) **METHOD FOR PRODUCING POSITIVE ELECTRODE ACTIVE MATERIAL FOR NON-AQUEOUS ELECTROLYTE SECONDARY BATTERY**

(30) Priority: 22.05.2020 JP 2020089794
(71) Applicant: Basf Toda Battery Materials LLC, Sanyo-Onoda Yamaguchi 756-0847 (JP)
(72) Inventor: OYAMA Masataka, Sanyoonoda-shi, Yamaguchi 756-0847 (JP); MASUKUNI Hiroaki, Sanyoonoda-shi, Yamaguchi 756-0847 (JP); IMAHASHI Taiki, Sanyoonoda-shi, Yamaguchi 756-0847 (JP); MORITA Daisuke, Sanyoonoda-shi, Yamaguchi 756-0847 (JP); NAKANISHI Takahiro, Sanyoonoda-shi, Yamaguchi 756-0847 (JP); KOGA Kazumichi, Sanyoonoda-shi, Yamaguchi 756-0847 (JP)
(74) Representative: Reitstötter Kinzebach
(86) International application number: PCT/JP2021/018928
(87) International publication number: WO 2021/235470

(57) **Abstract**

By a method including at least a spraying/mixing step of: mixing a precursor compound of a positive electrode active material with a lithium compound to prepare a mixture; and simultaneously spraying a spraying agent containing at least one element onto the mixture, there can be produced a positive electrode active material for non-aqueous electrolyte secondary batteries, which does not adversely affect battery properties of non-aqueous electrolyte secondary batteries, without reducing production efficiency.

## Description

### TECHNICAL FIELD

The present invention relates to a method for producing a positive electrode active material for non-aqueous electrolyte secondary batteries, capable of producing a positive electrode active material which can improve battery properties of non-aqueous electrolyte secondary batteries, without reducing production efficiency.

### BACKGROUND ART

In recent years, electronic devices such as portable and cordless mobile phones, notebook computers and the like have rapidly spread, and non-aqueous secondary batteries that are compact, lightweight, and have high energy density are used as power sources for driving these devices. Among them, lithium-ion secondary batteries, which use a material such as lithium nickelate for a positive electrode and have an advantage of a large charge-discharge capacity, are frequently used.

Therefore, research has been actively conducted on a layered rock salt oxide-based positive electrode active material for lithium-ion secondary batteries (basic composition: Li(NiM)O₂), which is a solid solution of nickel (Ni) having excellent versatility and other transition metals M.

Among such layered rock salt oxide-based positive electrode active materials, those containing, for example, tungsten (W), in addition to cobalt (Co), manganese (Mn), magnesium (Mg), aluminum (Al) and the like, which have been widely used in the past as transition metals are attracting attention. Since the presence of this tungsten on a particle surface and a particle interface of the positive electrode active material improves electron conductivity, or the like, attempts have been made to produce higher-performance lithium-ion secondary batteries by using this positive electrode active material.

In particular, when adding a metal element such as tungsten, it is important to make the metal element more minute and to arrange it uniformly on a particle surface layer of the positive electrode active material.

For example, Patent Literatures 1 and 2 describe methods for producing a layered rock salt oxide-based positive electrode active material by adding a tungsten compound when mixing a composite oxide or composite hydroxide composed of another transition metal compound(s) with a lithium compound, or when mixing another transition metal compound(s) with a lithium compound, before a calcination step for obtaining the positive electrode active material.

Patent Literatures 3 and 4 describe methods for producing a layered rock salt oxide-based positive electrode active material by spraying a "solution of a compound containing lithium and tungsten" (hereinafter also referred to as a "Li-W solution") onto a precursor of the positive electrode active material before a calcination step.

### CITATION LIST

### PATENT LITERATURE

[Patent Literature 1] Japanese Laid-Open Patent Publication No. 2014-197556
[Patent Literature 2] Japanese Laid-Open Patent Publication No. 2011-228292
[Patent Literature 3] Japanese Laid-Open Patent Publication No. 2019-040675
[Patent Literature 4] International Publication WO 2018/105481

### SUMMARY OF INVENTION

### TECHNICAL PROBLEM

However, in the methods described in Patent Literatures 1 and 2, there is a problem that unevenness occurs in a tungsten concentration when the tungsten compound is added, as a result, foreign substances derived from tungsten generate in a resultant positive electrode active material, and localization of tungsten causes variations in particle growth suppression effect of the positive electrode active material, which adversely affects battery properties.

In the methods described in Patent Literatures 3 and 4, there is a problem that production efficiency is greatly reduced since a step of spraying a Li-W solution onto the precursor of the positive electrode active material is separately added before mixing with the lithium compound after producing the precursor.

The present invention has been made in view of the conventional problems described above, and an object of the present invention is to provide a method capable of producing a positive electrode active material which does not adversely affect the battery properties without reducing the production efficiency.

### SOLUTION TO PROBLEM

In order to achieve the above object, the method for producing a positive electrode active material of the present invention is configured so that when mixing a precursor of the positive electrode active material with a lithium compound, these precursor and lithium compound are uniformly mixed while spraying an agent containing an element such as tungsten or zirconium onto these precursor and lithium compound.

A method for producing a positive electrode active material for non-aqueous electrolyte secondary batteries, according to the present invention, includes at least
a spraying/mixing step of:
mixing a precursor compound of the positive electrode active material with a lithium compound to prepare a mixture; and
simultaneously spraying a spraying agent containing at least one element onto the mixture.

### ADVANTAGEOUS EFFECTS OF INVENTION

In a production method of the present invention, since there are performed simultaneously: the mixing of the precursor compound with the lithium compound; and the addition of the spraying agent containing at least one element by spraying, the positive electrode active material obtained by the production method is more uniformly coated with fine particles added to the particle surface layer. Therefore, a non-aqueous electrolyte secondary battery using this positive electrode active material can improve the battery properties rather than adversely affects them. In addition, according to the production method of the present invention, such a positive electrode active material can be easily produced without reducing the production efficiency.

### BRIEF DESCRIPTION OF DRAWINGS

FIG. 1 is a flow chart (flow α) showing one embodiment of a method for producing a positive electrode active material for non-aqueous electrolyte secondary batteries, according to the present invention.
FIG. 2 is a flow chart (flow β) showing one embodiment of a method for producing a positive electrode active material for non-aqueous electrolyte secondary batteries, according to the present invention.
FIG. 3 is a flow chart (flow γ) showing one embodiment of a method for producing a positive electrode active material for non-aqueous electrolyte secondary batteries, according to the present invention.
FIG. 4 is a flow chart (flow δ) showing an example of a conventional method for producing a positive electrode active material.
FIG. 5 is a flow chart (flow ε) showing an example of a conventional method for producing a positive electrode active material.
FIG. 6 is a flow chart (flow ζ) showing an example of a conventional method for producing a positive electrode active material.

### DESCRIPTION OF EMBODIMENTS

Embodiments for performing the present invention will be described below. The following description of preferred embodiments is merely exemplary in nature and is not intended to limit the invention, its application or its uses.

The method for producing a positive electrode active material for non-aqueous electrolyte secondary batteries, according to the present invention, includes at least the following step. That is, the method includes a spraying/mixing step of mixing a precursor compound of the positive electrode active material with a lithium compound to prepare a mixture; and simultaneously spraying a spraying agent containing at least one element onto the mixture.

In the production method of the present invention, a precursor compound synthesized by a conventional method can be used as the precursor compound of the positive electrode active material used in the spraying/mixing step.

The precursor compound is preferably a composite hydroxide or a composite oxide each containing at least one element other than lithium (Li), according to the composition of the desired positive electrode active material. The at least one element other than Li is not particularly limited as long as it is an element which can constitute the positive electrode active material, and includes, for example, nickel (Ni), cobalt (Co), manganese (Mn), magnesium (Mg), aluminum (Al), molybdenum (Mo), niobium (Nb), vanadium (V), titanium (Ti), chromium (Cr), calcium (Ca), zinc (Zn), iron (Fe), gallium (Ga ), strontium (Sr), yttrium (Y), ruthenium (Ru), indium (In), tin (Sn), tantalum (Ta), bismuth (Bi), tungsten (W), zirconium (Zr), boron (B), phosphorus (P), and the like. Preferably, it is a composite hydroxide or a composite oxide each containing at least Ni, more preferably a composite hydroxide or a composite oxide each having a so-called ternary composition composed of Ni, Co and Mn, and particularly preferably a composite hydroxide or a composite oxide each in which a Ni content is 30mol% to 70mol% with respect to the total amount of Ni, Co and Mn.

A method for producing the composite hydroxide or the composite oxide is not particularly limited. For example, a method can be adopted, in which at least one aqueous solution of at least one element other than Li or a compound thereof is prepared according to the composition of the desired positive electrode active material, a mixing ratio is adjusted as necessary, and this is added into a reaction tank in which, for example, one or more alkaline aqueous solutions such as a sodium hydroxide aqueous solution and an ammonia solution are stirred as a mother liquor, and also sodium hydroxide or the like is simultaneously added dropwise so that a pH is controlled in an appropriate range of, for example, about 11 to about 13, and through this crystallization reaction, hydroxides and oxides having the shape of secondary particles obtained by aggregating primary particles aggregated by coprecipitation are obtained.

The precursor compound obtained by a wet reaction as described above may be subjected to a washing treatment, and after dehydration, may be subjected to a drying treatment. By performing the washing treatment, it is possible to wash away impurities such as sulfate radical, carbonate radical and Na content that are taken into the aggregated particles or adhere to a surface layer of the aggregated particles during the reaction. The drying treatment can be performed in an oxidizing atmosphere or the like, for example, at about 50°C to about 250°C.

The precursor compound can also be subjected to an oxidation treatment in an oxidizing atmosphere, for example, at about 300°C to about 800°C. By performing the oxidation treatment, the precursor compound can be oxidized, and purity of the precursor compound can be improved by removing the impurities from the precursor compound. In addition, it is also possible to increase a bulk density, thereby the production efficiency can be improved.

A major feature of the production method of the present invention is that, before calcination (hereinafter also referred to as "main calcination"), the precursor compound synthesized, for example, as described above and a lithium compound are mixed with each other to prepare a mixture, and simultaneously a spraying agent is sprayed onto the mixture.

Conventionally, attention has been focused on that when a surface of positive electrode active material particles is coated with, for example, tungsten (W), zirconium (Zr) or the like so that such elements exist in an island-like manner and more uniformly on at least a part of the surface of the particles, there is a possibility that battery properties such as input/output property and cycle property are improved when made into secondary batteries. So, attempts have been made to allow such elements to exist on a surface of secondary particles and in a surface layer of primary particles including an interface of the positive electrode active material by various methods. However, it is difficult to obtain a positive electrode active material uniformly coated with a particle surface layer in which such elements exist, even if a compound of such elements is added as it is in a form of powder. Further, even if such positive electrode active material particles could be obtained, the production method would increase the cost and impair the production efficiency, as in the techniques described in Patent Literatures 1 to 4.

However, when the element to be made exist on a particle surface or a particle interface of the positive electrode active material is prepared as a spraying agent and this spraying agent is sprayed at the same time as mixing of the precursor compound with the lithium compound, as in the production method of the present invention, the positive electrode active material particles uniformly coated with the desired element(s) can be easily obtained. In addition, since mixing time is not greatly lost, the positive electrode active material can be produced very efficiently and easily without reducing the production efficiency.

### <Operating conditions for spraying/mixing step>

The operating conditions for the spraying/mixing step are described in detail below.

Various lithium salts can be used without particular limitation as the lithium compound to be mixed with the precursor compound. Examples of the lithium compound include lithium carbonate, lithium hydroxide monohydrate, anhydrous lithium hydroxide, lithium nitrate, lithium acetate, lithium bromide, lithium chloride, lithium citrate, lithium fluoride, lithium iodide, lithium lactate, lithium oxalate, lithium phosphate, lithium pyruvate, lithium sulfate, lithium oxide, and the like. In the present invention, lithium carbonate, lithium hydroxide monohydrate, and anhydrous lithium hydroxide are preferred.

Among the above lithium compounds, lithium hydroxides are preferably used when a sprayed material is subjected to calcination at a low temperature, and it is preferable to use anhydrous lithium hydroxide from the viewpoint of improving productivity since a large amount of moisture is generated.

In the present specification, a material obtained by spraying a spraying agent onto a mixture of a precursor compound with a lithium compound is referred to as a "sprayed material".

The spraying agent to be sprayed onto the mixture of the precursor compound with the lithium compound may contain at least one element which is intended to exist in a crystal structure of the positive electrode active material, or to exist on the particle surface or the particle interface of the positive electrode active material.

Elements contained in the spraying agent are not particularly limited as long as they are elements capable of constituting the positive electrode active material, and examples thereof include Ni, Co, Mn, Mg, Al, Mo, Nb, W, Zr, B, P, V, Ti, Cr, Ca, Zn, Fe, Ga, Sr, Y, Ru, In, Sn, Ta, Bi, and the like.

For example, when a spraying agent containing at least one selected from Mn, Al, Mg, and Ti, among the above elements, is used, the element(s) is(are) allowed to exist particularly in the crystal structure of a surface layer portion of the particles more uniformly by going through a calcination step, and the crystal structure is stabilized. As a result, the obtained positive electrode active material can improve cycle property and high-temperature storage stability when fabricated into a non-aqueous electrolyte secondary battery

For example, when a spraying agent containing at least one selected from W, Zr, Nb, B, P, and Mo, among the above elements, is used, the element(s) is(are) allowed to exist mainly in the particle surface layer more uniformly in the form of an island or a coating, and a surface layer portion of the particles can be made to have a low resistance. As a result, the obtained positive electrode active material can further improve battery properties such as input/output property and cycle property when fabricated into a non-aqueous electrolyte secondary battery.

The spraying agent may be in any form as long as it can be sprayed onto the mixture of the precursor compound with the lithium compound, and is not particularly limited. Examples thereof include: solutions such as aqueous solutions and solutions comprising organic solvents; suspensions comprising water and/or organic solvents; and the like. The form of the spraying agent may be appropriately determined according to the type of at least one element contained.

For example, when the element is at least W, B, P, etc., the spraying agent is preferably an aqueous solution containing at least W, B, P, etc. When the element is at least Zr, Nb, Mo, etc., the spraying agent is preferably a suspension containing at least Zr, Nb, Mo, etc.

For example, when the element is at least Mn, Al, Mg, Ti, etc., the spraying agent may be a solution containing at least Mn, Al, Mg, Ti, etc., or may be a suspension containing at least Mn, Al, Mg, Ti, etc. The solution includes an aqueous sulfate solution, an aqueous carbonate solution, and the like. The suspension includes a suspension of compound powder having an average secondary particle diameter in a volume basis particle size distribution measurement of at least submicron, and about 5nm to about 800nm.

In the present specification, the average secondary particle diameter (D50) is measured by a wet laser method using a laser particle size distribution measuring apparatus "Microtrac HRA" commercially available from Nikkiso Co., Ltd. at a predetermined refractive index set according to compound powder to be measured, and is a value calculated on a volume basis.

When the element contained in the spraying agent is W, a W compound is not particularly limited. Examples thereof include tungsten oxide, sodium tungstate, ammonium paratungstate, hexacarbonyl tungsten, tungsten sulfide, and the like. Among them, tungsten oxide is preferred. An amount of W in the spraying agent is preferably 0.3mol% to 1.5mol%, more preferably 0.3mol% to 1.3mol% with respect to the total amount of metal elements in the precursor compound (for example, the total amount of Ni, Co and Mn in a ternary precursor compound composed of Ni, Co and Mn, as in Examples). The spraying agent used is preferably an aqueous solution.

When the element contained in the spraying agent is Zr, a Zr compound is not particularly limited. Examples thereof include zirconium oxide, stabilized zirconium (yttrium stabilized zirconium, YSZ), lithium zirconate, zirconium chloride, zirconium tungstate, and the like Among them, zirconium oxide is preferred. An amount of Zr in the spraying agent is preferably 0.3mol% to 1.5mol% with respect to the total amount of metal elements in the precursor compound (for example, the total amount of Ni, Co and Mn in a ternary precursor compound composed of Ni, Co and Mn, as in Examples). The spraying agent used is preferably a suspension comprising pure water.

When the element contained in the spraying agent is Nb, an Nb compound is not particularly limited. Examples thereof include niobium oxide, niobium hydroxide, lithium niobate, and the like. Among them, niobium oxide is preferred. An amount of Nb in the spraying agent is preferably 0.3mol% to 1.5mol% with respect to the total amount of metal elements in the precursor compound (for example, the total amount of Ni, Co and Mn in a ternary precursor compound composed of Ni, Co and Mn, as in Examples). The spraying agent used is preferably a suspension comprising pure water.

When the element contained in the spraying agent is B, a B compound is not particularly limited. Examples thereof include boron oxide, boric acid, lithium tetraborate, and the like. Among them, boric acid is preferred. An amount of B in the spraying agent is preferably 0.3mol% to 1.5mol% with respect to the total amount of metal elements in the precursor compound (for example, the total amount of Ni, Co and Mn in a ternary precursor compound composed of Ni, Co and Mn, as in Examples). The spraying agent used is preferably an aqueous solution.

A method for preparing the spraying agent is not particularly limited, and at least one element can be selected and the amount of each element can be appropriately adjusted according to the composition of the desired positive electrode active material. For example, there can be employed a method of mixing an element or a compound of an element (hereinafter also referred to as an "elemental compound") with an appropriate amount of a solvent such as water. In addition, for example, there can be employed a method of mixing an element or an elemental compound with: an appropriate amount of an acidic compound such as oxalic acid and/or an appropriate amount of an alkaline compound such as sodium hydroxide or a lithium compound; and an appropriate amount of a solvent such as water.

In particular, when the alkaline compound is a lithium compound, for example, there can be used the lithium compound exemplified as the lithium compound to be mixed with the precursor compound. In this case, in the finally obtained positive electrode active material, an amount of the lithium compound is preferably determined in consideration of the state of the element(s) to be added and the reaction between Li in the lithium compound and the element(s) to be added. For example, as shown in Example 1 according to the present invention, which will be described later, by adjusting a molar ratio of Li in the spraying agent to W to be added to be 4 : 1, particles of the positive electrode active material can be coated with a compound having the composition of Li₄WO₅.

From the viewpoint of not altering properties of the precursor compound and the lithium compound during the mixing, and from the viewpoint of suppressing corrosion of a vessel in which the mixture and/or the sprayed material exist, such as a spraying/mixing machine, pH of the spraying agent is preferably controlled to about 4 to about 12, more preferably about 5 to about 11.

When at least one element contained in the spraying agent is Zr, Nb or the like, there can be used as the spraying agent, as described above, a solution of Zr or Nb such as: an aqueous solution of zirconium sulfate, which is a sulfate solution; or an organic solution prepared by dissolving Zr or Nb in an organic solvent. In addition, for example, a suspension containing at least Zr or Nb can also be used. When a positive electrode active material is obtained by using a suspension as the spraying agent, there is an advantage that there can be produced from the positive electrode active material, an excellent non-aqueous electrolyte secondary battery having a more sufficient initial discharge capacity and capable of achieving higher output.

When the suspension containing Zr is used, the type of Zr is preferably an inorganic compound such as ZrO₂ or YSZ, and particularly preferably ZrO₂. In addition, a particle size of the Zr compound in the suspension may be any size as long as it does not cause clogging during spraying as the spraying agent. For example, the average secondary particle diameter in a volume basis particle size distribution measurement is several µm or less, preferably submicron, and more preferably 5nm to 800nm. When the average secondary particle diameter is small, it is usually difficult to mix in a powder form due to flowability. However, by applying the spraying/mixing step in the present invention, the particles of the positive electrode active material can be more uniformly coated with the Zr compound such as ZrO₂. As a result, effects of the Zr compound being fine particles can be obtained more fully, and output property and life property are further improved when fabricated into a non-aqueous electrolyte secondary battery

In the preparation of the spraying agent, an amount of the elemental compound to be added should be about 5wt% to about 40wt% of the total amount of the spraying agent. The larger the amount of the elemental compound to be added is, the larger an amount of element(s) which can be sprayed is, for example by spraying a small amount of the spraying agent. In addition, it is preferable to consider the relationship between factors of the precursor compound, such as a composition, an average secondary particle diameter and a specific surface area by the BET method (hereinafter referred to as a "BET specific surface area"). By setting the amount of the elemental compound to be added in an optimal range in consideration of these factors, it is possible to more uniformly spray the required amount of the element(s) onto the mixture with a smaller amount of the spraying agent. If the amount of the elemental compound to be added is too large, there is a possibility that the elemental compound is not dissolved during preparation of the spraying agent, and local precipitation occurs during spraying. If the amount of the elemental compound to be added is too small, there is a possibility that segregation occurs in the sprayed material, impairing uniformity. In the present invention, the amount of the elemental compound in the spraying agent is preferably 8wt% to 35wt%, and more preferably 8wt% to 33wt%. In addition, particularly when the precursor compound to be used is, for example, a precursor compound containing at least Ni, such as a ternary precursor compound composed of Ni, Co and Mn, as in Examples, and is a precursor compound of small particle size having an average secondary particle diameter of 5.5µm or less, further 2µm to 5µm, which will be described later, it is preferable to set the amount of the elemental compound in the spraying agent within such a range.

An optimal width of the relationship between the amount of the spraying agent and a spraying time (amount of spraying agent sprayed per minute) in the present invention is considered to be influenced also by, for example, factors of the precursor compound, such as the composition, the average secondary particle diameter and the BET specific surface area. In particular, when using a precursor compound of small particle size having an average secondary particle diameter of 5.5µm or less, further 2µm to 5µm, or when using a precursor compound having a BET specific surface area of 10m²/g or more, the optimal width is usually considered to be greatly influenced. Therefore, by controlling this condition, i.e., the amount of the spraying agent sprayed per minute, it becomes possible to uniformly spray the spraying agent onto the mixture without impairing flowability, thus, productivity of the positive electrode active material is improved.

A spraying pressure when the spraying agent is sprayed onto the mixture of the precursor compound with the lithium compound is not particularly limited, and may be, for example, in a range in which the spraying agent can be sprayed and the entire amount can be added to the mixture. However, if the spraying pressure of the spraying agent is too low, there is a possibility that spraying is not completed within the expected mixing time. In addition, there is a possibility that a diameter of droplets becomes too large during spraying, and the mixture cannot be uniformly coated with the spraying agent. Conversely, if the spraying pressure of the spraying agent is too high, there is a possibility that the diameter of the droplets becomes too small during spraying, and the mixture cannot be coated with the entire amount of the spraying agent. Moreover, there is a possibility that a spray nozzle may be clogged.

There is no particular limitation on spraying means for spraying the spraying agent onto the mixture of the precursor compound with the lithium compound. For example, any means, such as a spraying/mixing machine, which can uniformly and sufficiently spray the spray agent onto the mixture may be used. Moreover, various atomizers, spray nozzles, etc. can be exemplified as a spraying apparatus used for spraying.

The spraying time when the spraying agent is sprayed onto the mixture of the precursor compound with the lithium compound is preferably approximately the same as a time for obtaining the mixture of the precursor compound with the lithium compound, more preferably shorter than the time for obtaining the mixture. By completing the spraying in a time shorter than the time for obtaining the mixture, the sprayed spraying agent can be sufficiently stirred and uniformity can be further improved.

The spraying time of the spraying agent is not much different from a time in a conventional method of adding element(s) to be coated on a particle surface of a positive electrode active material without spraying in a form of a spraying agent, and may be a time which does not lower production efficiency. Further, the spraying time can be adjusted by appropriately adjusting a spraying amount, the spraying pressure, etc. of the spraying agent so that the spraying agent can be sprayed uniformly and sufficiently.

In the spraying/mixing step in the production method of the present invention, it is preferable that an internal pressure of a vessel in which "at least one of the mixture and the sprayed material" (hereinafter also referred to as the "mixture and/or sprayed material") is present is lower than an atmospheric pressure, that is, the spraying/mixing step is performed under reduced pressure. In this way, by performing the spraying/mixing step in a state in which the inside of the vessel such as a spraying/mixing machine where the mixture and/or sprayed material is present is pressure-reduced, for example, a solvent contained in the spraying agent can be removed easily to the extent that flowability of the mixture and/or sprayed material is not impaired, depending on the particle size of the desired positive electrode active material particles, even without separately providing a drying step which will be described later, and thus, productivity can be further improved.

In the production method of the present invention, removal of the solvent contained in the spraying agent can be promoted by performing the spraying/mixing step under stirring and reduced pressure.

Conventionally, when a mixing step is performed under reduced pressure using a relatively light weight and bulky raw material such as a lithium compound, there is a possibility that the lithium compound is scattered to a pump part for reducing the pressure, and deviation would occur from the desired mixing ratio of the precursor compound to the lithium compound. However, in the present invention, it has been found that such possibility can be eliminated by controlling spraying of the spraying agent in addition to setting the conditions at the start of mixing and operating under reduced pressure.

When the spraying/mixing step is performed under reduced pressure or under stirring and reduced pressure as described above, an internal degree of vacuum (internal gauge pressure) of a vessel in which the mixture and/or sprayed material is present is preferably -95kPa or more and less than OkPa, more preferably -95kPa to -20kPa, and particularly preferably - 95kPa to -30kPa. If the internal degree of vacuum of the vessel in which the mixture and/or the sprayed material is present is less than the above lower limit, there is a possibility that the sprayed droplets are drawn into a vacuum pump. By setting the internal degree of vacuum of the vessel in which the mixture and/or sprayed material is present to less than OkPa, and further to the above upper limit or lower, effects by performing the spraying/mixing step under reduced pressure or under stirring and reduced pressure can be obtained, and a drying time can be easily shortened, thus, productivity can be improved.

A time for performing the spraying/mixing step under reduced pressure or under stirring and reduced pressure is preferably such that the removal of the solvent contained in the spraying agent is promoted and production efficiency is not reduced.

In the production method of the present invention, heating can be performed in the spraying/mixing step. It is preferable that the heating is performed so that a maximum temperature of the sprayed material is 40°C to 150°C, further 50°C to 140°C, and particularly 60°C to 130°C. If the maximum temperature of the sprayed material is lower than the above lower limit, there is a possibility that a content of the spraying agent in the sprayed material increases due to the spraying agent which has been sprayed, flowability of the sprayed material significantly decreases, quality deteriorates due to uneven distribution of each compound in the sprayed material, and adhesion to the inside of a mixing machine occurs. In addition, there is a possibility that during calcination in the calcination step, it is necessary to apply a larger amount of heat quantity to promote volatilization of the spraying agent, making it difficult to control calcination appropriately, which reduces production efficiency. Conversely, if the maximum temperature of the sprayed material is higher than the above upper limit, there is a possibility that tertiary aggregated particles increase excessively.

A method for performing the heating as described above is not particularly limited. For example, there can be adopted a method in which the outer edge of a vessel in which the sprayed material is present, such as a spraying/mixing machine, is covered with, for example, a jacket, and: hot water of about 90°C is circulated; oil heated to about 120°C is circulated; or steam whose temperature is adjusted to about 120°C to about 160°C is circulated, so that the maximum temperature of the sprayed material is in the above temperature range.

In the production method of the present invention, there is performed a very simple operation of mixing the precursor compound with the lithium compound to prepare the mixture and simultaneously the spraying agent is sprayed onto this mixture, that is, a spraying/mixing step. However, depending on the average secondary particle diameter of the precursor compound which is related to an average secondary particle diameter of the desired positive electrode active material, it is preferable to perform a drying step of drying the sprayed material after the spraying/mixing step.

For example, when there is desired a positive electrode active material having a relatively large particle size, whose precursor compound has an average secondary particle diameter of about 12µm to about 30µm, it is also possible to maintain good flowability of a mixture even without drying the mixture by spraying the spraying agent simultaneously preparing the mixture, as described above. When volatilization of the contained spraying agent during calcination is taken into consideration, the drying step of drying the sprayed material may be performed after the spraying/mixing step. By performing a calcination step after such steps, the desired positive electrode active material particles can be obtained.

On the other hand, for example, when there is desired a positive electrode active material having a relatively small average secondary particle diameter, whose precursor compound has an average secondary particle diameter of about 1µm to about 12µm, particularly 2µm to 7µm, since there is a possibility that flowability of the sprayed material with an increased content of the spraying agent due to spraying of the spraying agent is greatly reduced, the sprayed material can be dried at the same time as the mixture is prepared while spraying the spraying agent. As a result, the solvent contained in the spraying agent, which is present in the sprayed material, is appropriately removed in a shorter period of time, and good flowability can be imparted to particles of the sprayed material without reducing production efficiency.

In addition to the above, it is important to perform the drying step especially when the BET specific surface area of the precursor compound is large. For example, when there is desired a positive electrode active material having a small average secondary particle diameter of about 1µm to about 6µm, and when the precursor compound is a hydroxide or an oxide and its BET specific surface area is about 5m²/g to about 80m²/g, productivity can be improved by drying at a higher temperature and controlling the temperature, for example, as described later.

In the drying step as described above, similarly to the above spraying/mixing step, the internal pressure of the vessel in which the sprayed material is present can be lower than an atmospheric pressure, that is, the drying step can be performed under reduced pressure. In this way, by performing the drying step in a state in which the inside of the vessel such as a spraying/mixing machine where the sprayed material is present is pressure-reduced, for example, a solvent contained in the spraying agent can be removed further easily to the extent that flowability of the sprayed material is not impaired, depending on the particle size of the desired positive electrode active material particles, and thus, productivity can be further improved.

In the production method of the present invention, removal of the solvent contained in the spraying agent can be further promoted by performing the drying step under stirring and reduced pressure.

When the drying step is performed under reduced pressure or under stirring and reduced pressure as described above, an internal degree of vacuum (internal gauge pressure) of a vessel in which the sprayed material is present is preferably -95kPa or more and less than OkPa, more preferably -95kPa to -20kPa, and particularly preferably -95kPa to -30kPa. If the internal degree of vacuum of the vessel in which the sprayed material is present is less than the above lower limit, there is a possibility that the sprayed droplets are drawn into a vacuum pump. By setting the internal degree of vacuum of the vessel in which the sprayed material is present to less than OkPa, and further to the above upper limit or lower, effects by performing the drying step under reduced pressure or under stirring and reduced pressure can be obtained, and a drying time can be further easily shortened, thus, productivity can be further improved.

A time for performing the drying step under reduced pressure or under stirring and reduced pressure is preferably such that the removal of the solvent contained in the spraying agent is promoted and production efficiency is not reduced.

In the drying step as described above, similarly to the above spraying/mixing step, heating can be performed. It is preferable that the heating is performed so that the maximum temperature of the sprayed material is 40°C to 150°C, further 50°C to 140°C, and particularly 60°C to 130°C. If the maximum temperature of the sprayed material is lower than the above lower limit, there is a possibility that a drying rate of the spraying agent is too low, resulting in reduce in production efficiency. Conversely, if the maximum temperature of the sprayed material is higher than the above upper limit, there is a possibility that ununiform dehydration reaction occurs in the precursor compound in the sprayed material, resulting in formation of different phases.

A method for performing the heating in the drying step as described above is not particularly limited, and the same method as in the method for performing the heating in the spraying/mixing step can be employed.

A time for performing the drying step is preferably approximately the same as the time for obtaining the mixture of the precursor compound with the lithium compound without performing the spraying step, more preferably shorter than the time for obtaining the mixture. If a time for removing the solvent contained in the spraying agent by drying is too long, there is a possibility that not only the mixture begin to separate, resulting in lower of homogeneity, but also production efficiency is reduced.

In the production method of the present invention, it is preferable to heat the sprayed material as described above in at least one of the spraying/mixing step and the drying step.

As described above, the major feature of the production method of the present invention is that, prior to main calcination, there is performed the spraying/mixing step of: mixing the precursor compound with the lithium compound to prepare the mixture; and simultaneously spraying the spraying agent onto the mixture. And then, the desired positive electrode active material can be obtained by calcination at a predetermined temperature.

For example, the desired positive electrode active material can be obtained by performing the calcination two or more times with changing the temperature from a low temperature to a high temperature. In this way, when the previous calcination at a low temperature is regarded as a preliminary calcination and the subsequent calcination at a high temperature is regarded as a main calcination, the preliminary calcination can be performed in the spraying/mixing step. Also, the preliminary calcination can be performed in the drying step which is optionally performed after the spraying /mixing step, as described above, and in addition, it can be performed after the drying step.

By performing such preliminary calcination, reactivity of the precursor compound with the lithium compound is increased, the lithium compound is decomposed and melted with respect to the precursor compound, and synthesis reaction proceeds more reliably and uniformly. As a result, crystal growth and particle growth can be promoted in the subsequent main calcination, and the desired particle shape and composition of the positive electrode active material can be easily achieved.

A calcination temperature of the preliminary calcination is not particularly limited, and it is preferable that the calcination temperature is less than 750°C, further 350°C to 750°C, particularly 350°C to 700°C. If the calcination temperature of the preliminary calcination is too low, there is a possibility that reactivity of the precursor compound with the lithium compound is not sufficiently increased. Conversely, if the calcination temperature of the preliminary calcination is higher than the above upper limit, there is a possibility that the crystal growth in the main calcination proceeds excessively and battery properties of the obtained positive electrode active material deteriorate. In addition, a time for maintaining a high temperature state in the preliminary calcination is not particularly limited as long as the reactivity of the precursor compound with the lithium compound can be sufficiently increased, and is usually preferably about 1 hour to about 10 hours.

The main calcination, which follows the spraying/mixing step or, if necessary, the drying step, can be performed, for example, in an oxidizing atmosphere. The oxidizing atmosphere can be obtained by setting an oxygen concentration assuming a valence state of the positive electrode active material after the main calcination of the precursor compound. For example, it is preferable that the oxygen concentration is about 18vol% to about 99vol%.

A calcination temperature which is a maximum temperature of the main calcination is not particularly limited, and may be appropriately adjusted according to the composition of the desired positive electrode active material. The calcination temperature of the main calcination may be higher than the calcination temperature of the preliminary calcination, and for example, it is preferable that the calcination temperature is 650°C to 1100°C, further 700°C to 1000°C. If the calcination temperature of the main calcination is lower than the above lower limit, there is a possibility that the positive electrode active material having the desired crystal structure and particle state cannot be obtained. Conversely, if the calcination temperature of the main calcination is higher than the above upper limit, there is a possibility that crystal growth proceeds excessively and battery properties of the obtained positive electrode active material deteriorate. In addition, there is a possibility that a valence balance in the composition of the desired positive electrode active material becomes to be bad and the battery properties deteriorate when fabricated into a non-aqueous electrolyte secondary battery Moreover, a calcination time after reaching the maximum temperature of the main calcination is not particularly limited as long as a positive electrode active material having the desired crystal structure can be obtained, and is usually preferably about 1 hour to about 10 hours.

In the production method of the present invention, when the preliminary calcination is performed as described above, crystal growth and particle growth are promoted by the main calcination, and calcination efficiency is also increased. As a result, it is possible to obtain a positive electrode active material having the desired crystal structure with higher homogeneity in terms of compositional state, particle size, crystallinity, and the like.

An average secondary particle diameter in a volume basis of the positive electrode active material is preferably, for example, 1µm to 20µm. If the average secondary particle diameter is less than the above lower limit, there is a possibility that the positive electrode active material used as a positive electrode will have high reactivity with an electrolytic solution, resulting in deterioration of battery properties. Conversely, if the average secondary particle diameter exceeds the above upper limit, there is a possibility that contact with the electrolytic solution deteriorates when the positive electrode active material is used as the positive electrode, and the battery properties deteriorate such that the required output cannot be maintained.

A desired non-aqueous electrolyte secondary battery can be produced by forming a positive electrode using the positive electrode active material obtained by the production method of the present invention.

The non-aqueous electrolyte secondary battery is usually constituted of a positive electrode, a negative electrode, and an electrolytic solution containing an electrolyte.

The positive electrode is produced in accordance with an ordinary method. That is, a conductive agent and a binder are added to the positive electrode active material obtained by the production method of the present invention, and these are mixed with each other. As the conductive agent, for example, acetylene black, carbon black, graphite, and the like are preferred. As the binder, for example, polytetrafluoroethylene, polyvinylidene fluoride, and the like are preferred.

For the negative electrode, there can be used negative electrode active materials such as: at least one nonmetallic element or metallic element selected from the group consisting of Si, Al, Sn, Pb, Zn, Bi, and Cd; an alloy containing the element(s) or a chalcogenide containing the element(s); metallic lithium; graphite; and a low crystalline carbon material.

As a solvent of the electrolytic solution, there can be used an organic solvent including at least one of carbonates such as propylene carbonate and dimethyl carbonate, and ethers such as dimethoxyethane, as well as a combination of ethylene carbonate and diethyl carbonate.

As the electrolyte, there can be used at least one of lithium salts such as lithium perchlorate and lithium tetrafluoroborate as well as lithium hexafluorophosphate, which are dissolved in the above solvent.

### <Function>

In the production method according to the present invention, mixing of the precursor compound with the lithium compound and spraying of the spraying agent containing at least one element are performed simultaneously. Therefore, by the production method according to the present invention, it is possible to easily produce a positive electrode active material capable of improving battery properties of a non-aqueous electrolyte secondary battery, rather than adversely affecting them, without reducing production efficiency.

### EXAMPLES

The present invention will be concretely described by using specific examples of the present invention and comparative examples. However, the present invention is not limited to these examples.

### <Composition of Precursor compound and Positive electrode active material>

In the present specification, compositions of the precursor compound and the positive electrode active material were determined in accordance with the following method. A sample, i.e., 0.2g of the precursor compound or the positive electrode active material, was heated and dissolved in 25mL of a hydrochloric acid solution having a concentration of 20% to give a solution, and the solution was cooled. The cooled solution was transferred to a volumetric flask having a capacity of 100mL and then, pure water was added thereto to prepare an adjusted solution. A quantity of each element in the precursor compound or the positive electrode active material was determined by using the adjusted solution and ICP-AES Spectrometer "Optima 8300" commercially available from PerkinElmer Japan Co., Ltd.

### <XRD of Positive electrode active material>

XRD data were obtained under the following X-ray diffraction conditions by using X-ray diffractometer "SmartLab" commercially available from Rigaku Corporation. The presence or absence of different phases was confirmed by using the obtained XRD data. (X-ray diffraction conditions)

| | |
|---|---|
| X-ray source: | Cu-Kα ray |
| Accelerating voltage and current: | 45kV and 200mA |
| Sampling width: | 0.02deg. |
| Scan range: | 15deg. to 122deg. |
| Scan speed: | 0.4°/min. step |
| Divergence slit width: | 0.65deg. |
| Light receiving slit width: | 0.2mm |
| Scattering slit: | 0.65deg. |

### <Preparation of Precursor compound A>

A nickel sulfate aqueous solution, a cobalt sulfate aqueous solution, and a manganese sulfate aqueous solution were mixed with each other so that a proportion (molar ratio) of Ni, Co, and Mn was adjusted to Ni : Co : Mn = 1 : 1 : 1 to give a mixed aqueous solution. In a reaction vessel was previously prepared 10L of pure water as a mother liquor, containing 300g of a sodium hydroxide aqueous solution and 500g of an ammonia solution, and an atmosphere in the reaction vessel was purged with N₂ gas at a flow rate of 0.7L/min., and a reaction was carried out also under a N₂ atmosphere.

Thereafter, the mixed aqueous solution, the sodium hydroxide aqueous solution, and the ammonia solution were dropped simultaneously at a prescribed speed with rotating agitating blades at 1000rpm. By a crystallization reaction in which a dropping amount of alkaline solutions, i.e., the sodium hydroxide aqueous solution and the ammonia solution, was adjusted so that pH of a reaction system was 12.0, the reaction system was coprecipitated so that agglomerated particles were formed by crystallization of Ni, Co, and Mn to obtain a coprecipitate.

Thereafter, slurry in the reaction vessel was separated into solid and liquid, and the solid was further washed with pure water to reduce residual impurities. Then, a caked coprecipitate was dried at 110°C for 12 hours under an atmosphere to obtain a precursor compound A having an average secondary particle diameter of 4.9µm.

### <Preparation of Precursor compound B>

A nickel sulfate aqueous solution, a cobalt sulfate aqueous solution, and a manganese sulfate aqueous solution were mixed with each other so that a proportion (molar ratio) of Ni, Co, and Mn was adjusted to Ni : Co : Mn = 1 : 1 : 1 to give a mixed aqueous solution. In a reaction vessel was previously prepared 10L of pure water as a mother liquor, containing 360g of a sodium hydroxide aqueous solution and 500g of an ammonia solution, and an atmosphere in the reaction vessel was purged with N₂ gas at a flow rate of 0.7L/min., and a reaction was carried out also under a N₂ atmosphere.

Thereafter, the mixed aqueous solution, the sodium hydroxide aqueous solution, and the ammonia solution were dropped simultaneously at a prescribed speed with rotating agitating blades at 1000rpm. By a crystallization reaction in which a dropping amount of alkaline solutions, i.e., the sodium hydroxide aqueous solution and the ammonia solution, was adjusted so that pH of a reaction system was 12.5, the reaction system was coprecipitated so that agglomerated particles were formed by crystallization of Ni, Co, and Mn to obtain a coprecipitate.

Thereafter, slurry in the reaction vessel was separated into solid and liquid, and the solid was further washed with pure water to reduce residual impurities. Then, a caked coprecipitate was dried at 110°C for 12 hours under an atmosphere to obtain a precursor compound B having an average secondary particle diameter of 3.0µm.

### [Setting of Drying end point A]

The precursor compound A and lithium carbonate were weighed so that a proportion (molar ratio) of Li to the total amount of Ni, Co, and Mn was adjusted to Li/(Ni + Co + Mn) = 1.05, and they were put into a spraying/mixing machine and mixed with each other to obtain a mixture of the precursor compound A and lithium carbonate. Then, a moisture amount in the mixture was measured and found to be 0.48wt%. By using this moisture amount, a drying end point A in each drying step in Examples 1 to 14 and Comparative Examples 1 to 2 was set to 0.50wt% or less.

### [Setting of Drying end point B]

The precursor compound B and lithium carbonate were weighed so that a proportion (molar ratio) of Li to the total amount of Ni, Co, and Mn was adjusted to Li/(Ni + Co + Mn) = 1.05, and they were put into a spraying/mixing machine and mixed with each other to obtain a mixture of the precursor compound B and lithium carbonate. Then, a moisture amount in the mixture was measured and found to be 0.96wt%. By using this moisture amount, a drying end point B in a drying step in Example 15 was set to 1.00wt% or less.

In the present specification, the moisture amount in the mixture and a moisture amount in the sprayed material were measured by using a halogen moisture meter "MB120" commercially available from OHAUS Corporation, and an amount of weight loss when heated at 120°C was defined as the moisture amount.

### <Example 1>

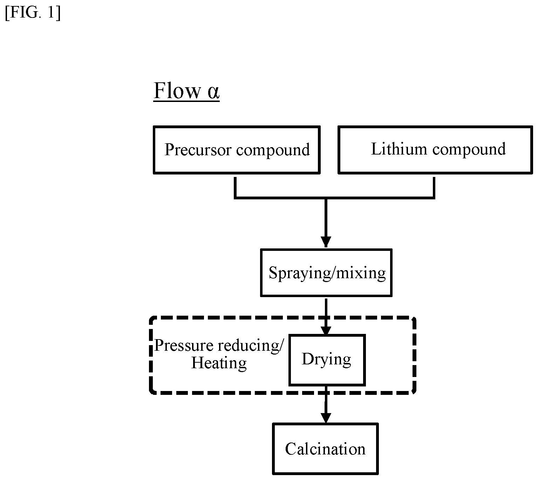

A positive electrode active material was produced in accordance with a flow chart (flow α) shown in FIG. 1.

### [Preparation step of Spraying agent]

In 660.9g of pure water was dissolved 43.6g of powdery lithium hydroxide monohydrate (LiOH•H₂O) to prepare a lithium hydroxide aqueous solution. Then, 60.9g of powdery tungsten oxide (WOs) was put into the lithium hydroxide aqueous solution, and they were stirred to dissolve the entire amount of tungsten oxide. As a result, was prepared 765.4g of a Li₄WO₅ aqueous solution having a weight concentration, i.e., an amount of an elemental compound in the spraying agent, of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, they were mixed with each other in the spraying/mixing machine, and simultaneously 383g of the Li₄WO₅ aqueous solution was sprayed onto powder being mixed over a period of 10 minutes to give a sprayed material, i.e., sprayed powder.

### [Drying step]

An internal degree of vacuum of the spraying/mixing machine was adjusted to - 70kPa. Then, heating of the sprayed material was started, and simultaneously also a mixing treatment was started. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.47wt%, so it was judged that drying was completed. A time required for the drying step was 8 minutes. The total treatment time required for the spraying/mixing step and the drying step was 18 minutes. In this procedure, the heating of the sprayed material was adjusted by circulating hot water of 95°C in the spraying/mixing machine.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials A1 to A5.

### [Evaluation of uniformity of Spraying compound]

As to each of the obtained positive electrode active materials A1 to A5, a molar ratio of W to (Ni + Co + Mn), i.e., "[W/(Ni + Co + Mn)] (molar ratio)", was measured in accordance with the following method, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5. In the present Example 1 and the following Examples 2 to 11, 13 and 15 and Comparative Examples 1 to 3, the spraying compound was W, and Me = (Ni + Co + Mn).

### [Measurement of "[W/(Ni + Co + Mn)] (molar ratio)"]

A sample, i.e., 0.2g of the positive electrode active material, was heated and dissolved in 25mL of a hydrochloric acid solution having a concentration of 20% to give a solution, and the solution was cooled. The cooled solution was transferred to a volumetric flask having a capacity of 100mL and then, pure water was added thereto to prepare an adjusted solution. A quantity of each element in the positive electrode active material was determined by using the adjusted solution and ICP-AES Spectrometer "Optima 8300" commercially available from PerkinElmer Japan Co., Ltd.

### <Example 2>

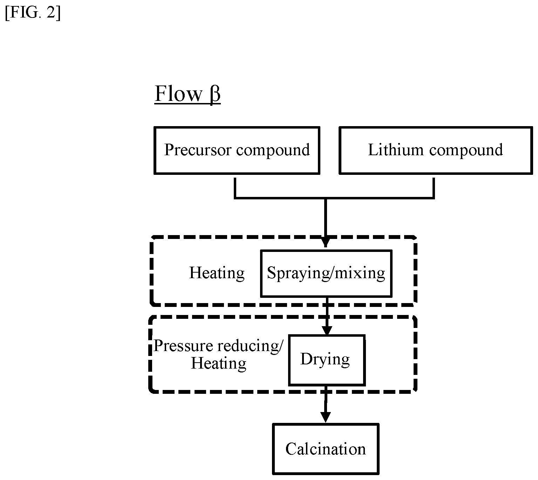

A positive electrode active material was produced in accordance with a flow chart (flow β) shown in FIG. 2.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

An internal degree of vacuum of the spraying/mixing machine was adjusted to - 70kPa. Then, a mixing treatment was started while maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.45wt%, so it was judged that drying was completed. A time required for the drying step was 6 minutes. The total treatment time required for the spraying/mixing step and the drying step was 16 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials B1 to B5.

### [Evaluation of uniformity of Spraying compound]

As to each of the obtained positive electrode active materials B1 to B5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 3>

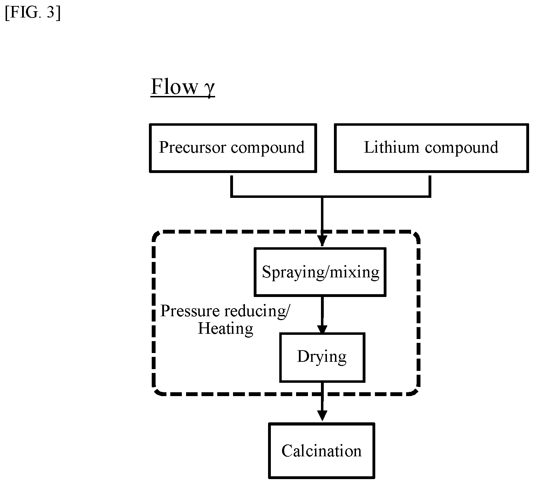

A positive electrode active material was produced in accordance with a flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining the internal degree of vacuum of the spraying/mixing machine at -70kPa and also maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.46wt%, so it was judged that drying was completed. A time required for the drying step was 4 minutes. The total treatment time required for the spraying/mixing step and the drying step was 14 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials C1 to C5.

### [Evaluation of uniformity of Spraying compound]

As to each of the obtained positive electrode active materials C1 to C5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 4>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating steam of 120°C in the spraying/mixing machine.

### [Drying step]

A mixing treatment was started while maintaining the internal degree of vacuum of the spraying/mixing machine at -70kPa and also maintaining heating of the sprayed material. An internal pressure of the spraying/mixing machine was adjusted to an atmospheric pressure when a temperature of the sprayed material reached 115°C, and the heating and the mixing treatment of the sprayed material were terminated. Thereafter, the moisture amount in the sprayed material was measured and found to be 0.45wt%, so it was judged that drying was completed. A time required for the drying step was 4 minutes. The total treatment time required for the spraying/mixing step and the drying step was 14 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials D1 to D5.

### [Evaluation of uniformity of Spraying compound]

As to each of the obtained positive electrode active materials D1 to D5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 5>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 83°C in the spraying/mixing machine.

### [Drying step]

A mixing treatment was started while maintaining the internal degree of vacuum of the spraying/mixing machine at -70kPa and also maintaining heating of the sprayed material. After a temperature of the sprayed material reached 80°C, the temperature of the sprayed material was maintained at 80°C for 2 minutes. Then, an internal pressure of the spraying/mixing machine was adjusted to an atmospheric pressure, and the heating and the mixing treatment of the sprayed material were terminated. Thereafter, the moisture amount in the sprayed material was measured and found to be 0.47wt%, so it was judged that drying was completed. A time required for the drying step was 6 minutes. The total treatment time required for the spraying/mixing step and the drying step was 16 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials E1 to E5.

### [Evaluation of uniformity of Spraying compound]

As to each of the obtained positive electrode active materials E1 to E5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 6>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 73°C in the spraying/mixing machine.

### [Drying step]

A mixing treatment was started while maintaining the internal degree of vacuum of the spraying/mixing machine at -70kPa and also maintaining heating of the sprayed material. After a temperature of the sprayed material reached 70°C, the temperature of the sprayed material was maintained at 70°C for 4 minutes. Then, an internal pressure of the spraying/mixing machine was adjusted to an atmospheric pressure, and the heating and the mixing treatment of the sprayed material were terminated. Thereafter, the moisture amount in the sprayed material was measured and found to be 0.47wt%, so it was judged that drying was completed. A time required for the drying step was 8 minutes. The total treatment time required for the spraying/mixing step and the drying step was 18 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials F1 to F5.

### [Evaluation of uniformity of Spraying compound]

As to each of the obtained positive electrode active materials F1 to F5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 7>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 62°C in the spraying/mixing machine.

### [Drying step]

A mixing treatment was started while maintaining the internal degree of vacuum of the spraying/mixing machine at -70kPa and also maintaining heating of the sprayed material. After a temperature of the sprayed material reached 60°C, the temperature of the sprayed material was maintained at 60°C for 7 minutes. Then, an internal pressure of the spraying/mixing machine was adjusted to an atmospheric pressure, and the heating and the mixing treatment of the sprayed material were terminated. Thereafter, the moisture amount in the sprayed material was measured and found to be 0.48wt%, so it was judged that drying was completed. A time required for the drying step was 13 minutes. The total treatment time required for the spraying/mixing step and the drying step was 23 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials G1 to G5.

### [Evaluation of uniformity of Spraying compound]

As to each of the obtained positive electrode active materials G1 to G5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 8>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -90kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining the internal degree of vacuum of the spraying/mixing machine at -90kPa and also maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.46wt%, so it was judged that drying was completed. A time required for the drying step was 3 minutes. The total treatment time required for the spraying/mixing step and the drying step was 13 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials H1 to H5.

### [Evaluation of uniformity of Spraying compound]

As to each of the obtained positive electrode active materials H1 to H5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 9>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -40kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining the internal degree of vacuum of the spraying/mixing machine at -40kPa and also maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.45wt%, so it was judged that drying was completed. A time required for the drying step was 6 minutes. The total treatment time required for the spraying/mixing step and the drying step was 16 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials I1 to I5.

### [Evaluation of uniformity of Spraying compound]

As to each of the obtained positive electrode active materials I1 to I5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 10>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining heating of the sprayed material. When a temperature of the sprayed material reached 90°C, the heating and the mixing treatment of the sprayed material were terminated. Thereafter, the moisture amount in the sprayed material was measured and found to be 0.47wt%, so it was judged that drying was completed. A time required for the drying step was 11 minutes. The total treatment time required for the spraying/mixing step and the drying step was 21 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials J1 to J5.

### [Evaluation of uniformity of Spraying compound]

As to each of the obtained positive electrode active materials J1 to J5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 11>

A positive electrode active material was produced in accordance with the flow chart (flow γ) shown in FIG. 3.

### [Preparation step of Spraying agent]

In 604.3g of pure water was dissolved 21.8g of powdery lithium hydroxide monohydrate (LiOH•H₂O) to prepare a lithium hydroxide aqueous solution. Then, 60.9g of powdery tungsten oxide (WOs) was put into the lithium hydroxide aqueous solution, and they were stirred to dissolve the entire amount of tungsten oxide. As a result, was prepared 687g of a Li₂WO₄ aqueous solution having a weight concentration, i.e., an amount of an elemental compound in the spraying agent, of 10wt% in terms of Li₂WO₄.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 383g of the Li₂WO₄ aqueous solution was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining the internal degree of vacuum of the spraying/mixing machine at -70kPa and also maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.49wt%, so it was judged that drying was completed. A time required for the drying step was 5 minutes. The total treatment time required for the spraying/mixing step and the drying step was 15 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials K1 to K5.

### [Evaluation of uniformity of Spraying compound]

As to each of the obtained positive electrode active materials K1 to K5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 12>

A positive electrode active material was produced in accordance with the flow chart (flow γ) shown in FIG. 3.

### [Preparation step of Spraying agent]

Into 943g of pure water was put 82g of powdery zirconium oxide (ZrO₂) having an average secondary particle diameter of 114nm, and they were stirred by using a stirrer to prepare 1025g of a ZrO₂ suspension having a weight concentration, i.e., an amount of an elemental compound in the spraying agent, of 8wt%.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 205.3g of the ZrO₂ suspension was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining the internal degree of vacuum of the spraying/mixing machine at -70kPa and also maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.49wt%, so it was judged that drying was completed. A time required for the drying step was 5 minutes. The total treatment time required for the spraying/mixing step and the drying step was 15 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials L1 to L5.

### [Evaluation of uniformity of Spraying compound]

As to each of the obtained positive electrode active materials L1 to L5, "[Zr/(Ni + Co + Mn)] (molar ratio)" was measured in the same manner as in Example 1, and each value obtained by multiplying the measured "[Zr/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5. In the present Example 12 and the following Example 14, the spraying compound was Zr, and Me = (Ni + Co + Mn).

### <Example 13>

A positive electrode active material was produced in accordance with a flow chart (flow γ) shown in FIG. 3.

### [Preparation step of Spraying agent]

In 243.4g of pure water was dissolved 43.6g of powdery lithium hydroxide monohydrate (LiOH•H₂O) to prepare a lithium hydroxide aqueous solution. Then, 60.9g of powdery tungsten oxide (WOs) was put into the lithium hydroxide aqueous solution, and they were stirred to dissolve the entire amount of tungsten oxide. As a result, was prepared 347.9g of a Li₄WO₅ aqueous solution having a weight concentration, i.e., an amount of an elemental compound in the spraying agent, of 22wt% in terms of Li₄WO₅.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, they were mixed with each other in the spraying/mixing machine, and simultaneously 146.7g of the Li₄WO₅ aqueous solution was sprayed onto powder being mixed over a period of 10 minutes to give a sprayed material, i.e., sprayed powder.

### [Drying step]

An internal degree of vacuum of the spraying/mixing machine was adjusted to - 70kPa. Then, heating of the sprayed material was started, and simultaneously also a mixing treatment was started. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.45wt%, so it was judged that drying was completed. A time required for the drying step was 2 minutes. The total treatment time required for the spraying/mixing step and the drying step was 12 minutes. In this procedure, the heating of the sprayed material was adjusted by circulating hot water of 95°C in the spraying/mixing machine.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials M1 to M5.

### [Evaluation of uniformity of Spraying compound]

As to each of the obtained positive electrode active materials M1 to M5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 14>

A positive electrode active material was produced in accordance with the flow chart (flow γ) shown in FIG. 3.

### [Preparation step of Spraying agent]

Into 159.2g of pure water was put 82g of powdery zirconium oxide (ZrO₂) having an average secondary particle diameter of 114nm, and they were stirred by using a stirrer to prepare 241.2g of a ZrO₂ suspension having a weight concentration, i.e., an amount of an elemental compound in the spraying agent, of 34wt%.

### [Spraying/mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 48.3g of the ZrO₂ suspension was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining the internal degree of vacuum of the spraying/mixing machine at -70kPa and also maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.48wt%, so it was judged that drying was completed. A time required for the drying step was 1 minute. The total treatment time required for the spraying/mixing step and the drying step was 11 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials N1 to N5.

### [Evaluation of uniformity of Spraying compound]

As to each of the obtained positive electrode active materials N1 to N5, "[Zr/(Ni + Co + Mn)] (molar ratio)" was measured in the same manner as in Example 1, and each value obtained by multiplying the measured "[Zr/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Example 15>

A positive electrode active material was produced in accordance with the flow chart (flow γ) shown in FIG. 3.

### [Preparation step of Spraying agent]

In the same manner as in Example 1, was prepared 765.4g of a Li₄WO₅ aqueous solution having a weight concentration of 10wt% in terms of Li₄WO₅.

### [Spraying/mixing step]

The precursor compound B and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound B and lithium carbonate was 3525g. Subsequently, after an internal degree of vacuum of the spraying/mixing machine was adjusted to -70kPa, they were mixed with each other in the spraying/mixing machine, and simultaneously heating of powder being mixed was started, and furthermore simultaneously 383g of the Li₄WO₅ aqueous solution was sprayed onto the powder being mixed over a period of 10 minutes to give a sprayed material, i.e., sprayed powder. In this procedure, the heating of the powder being mixed was adjusted by circulating hot water of 95°C in the spraying/mixing machine.

### [Drying step]

A mixing treatment was started while maintaining the internal degree of vacuum of the spraying/mixing machine at -70kPa and also maintaining heating of the sprayed material. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.97wt%, so it was judged that drying was completed. A time required for the drying step was 4 minutes. The total treatment time required for the spraying/mixing step and the drying step was 14 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials O1 to O5.

### [Evaluation of uniformity of Spraying compound]

As to each of the obtained positive electrode active materials O1 to O5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Comparative Example 1>

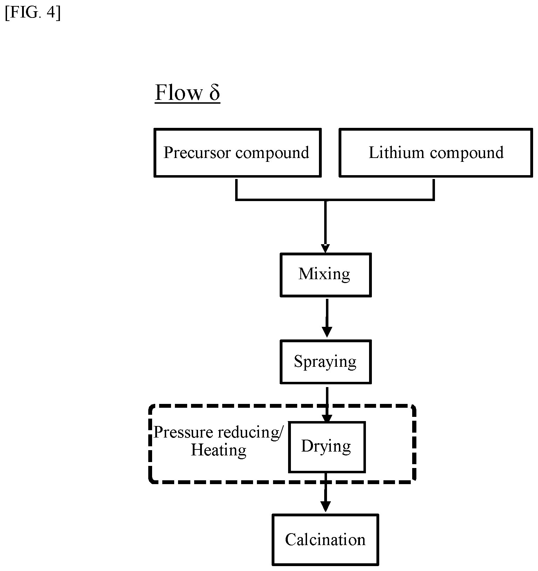

A positive electrode active material was produced in accordance with a flow chart (flow δ) shown in FIG. 4.

### [Preparation step of Spraying agent]

In the same manner as in Example 1, was prepared 765.4g of a Li₄WO₅ aqueous solution having a weight concentration of 10wt% in terms of Li₄WO₅.

### [Mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, they were mixed with each other in the spraying/mixing machine over a period of 10 minutes to give a mixture.

### [Spraying step]

With stirring the mixture, 383g of the Li₄WO₅ aqueous solution was sprayed onto the mixture over a period of 10 minutes.

### [Drying step]

An internal degree of vacuum of the spraying/mixing machine was adjusted to - 70kPa. Then, heating of a sprayed material was started, and simultaneously also a mixing treatment was started. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.46wt%, so it was judged that drying was completed. A time required for the drying step was 7 minutes. The total treatment time required for the mixing step, the spraying step and the drying step was 27 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials P1 to P5.

### [Evaluation of uniformity of Spraying compound]

As to each of the obtained positive electrode active materials P1 to P5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Comparative Example 2>

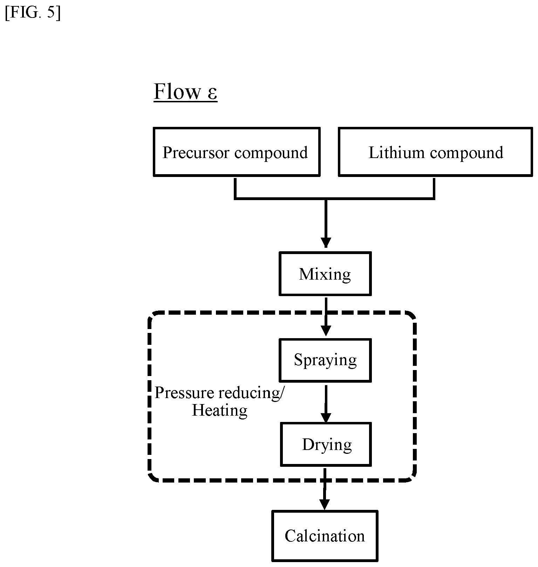

A positive electrode active material was produced in accordance with a flow chart (flow ε) shown in FIG. 5.

### [Preparation step of Spraying agent]

In the same manner as in Example 1, was prepared 765.4g of a Li₄WO₅ aqueous solution having a weight concentration of 10wt% in terms of Li₄WO₅.

### [Mixing step]

The precursor compound A and lithium carbonate (Li₂CO₃) were weighed so that a proportion (molar ratio) of Li to the total amount of Ni, Co, and Mn was adjusted to Li/(Ni + Co + Mn) = 1.05, and they were put into the spraying/mixing machine. The total weight of the precursor compound A and lithium carbonate was 3525g. Subsequently, they were mixed with each other in the spraying/mixing machine over a period of 10 minutes to give a mixture.

### [Spraying step]

An internal degree of vacuum of the spraying/mixing machine was adjusted to - 70kPa. Then, heating of the mixture was started, and simultaneously 383g of the Li₄ WO₅ aqueous solution was sprayed onto the mixture over a period of 10 minutes with stirring the mixture. In this procedure, the heating of the mixture was adjusted by circulating hot water of 95°C in the spraying/mixing machine.

### [Drying step]

An internal degree of vacuum of the spraying/mixing machine was adjusted to - 70kPa. Then, heating of a sprayed material was started, and simultaneously also a mixing treatment was started. An internal pressure of the spraying/mixing machine was adjusted to an atmospheric pressure when a temperature of the sprayed material reached 90°C, and the heating and the mixing treatment of the sprayed material were terminated. Thereafter, the moisture amount in the sprayed material was measured and found to be 0.47wt%, so it was judged that drying was completed. A time required for the drying step was 4 minutes. The total treatment time required for the mixing step, the spraying step and the drying step was 24 minutes.

### [Calcination step]

The sprayed material in the spraying/mixing machine was randomly collected at five points. Collected sprayed materials were subjected to calcination under an atmosphere at a maximum temperature of 950°C for 5 hours to obtain positive electrode active materials Q1 to Q5.

### [Evaluation of uniformity of Spraying compound]

As to each of the obtained positive electrode active materials Q1 to Q5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5.

### <Comparative Example 3>

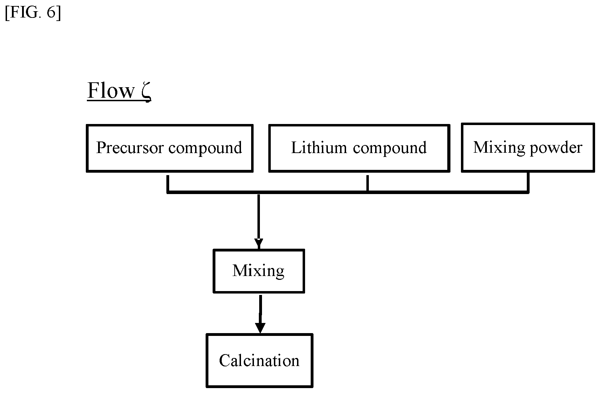

A positive electrode active material was produced in accordance with a flow chart (flow ζ) shown in FIG. 6.

### [Preparation step of Mixing powder]

There were mixed 25.1g of powdery lithium hydroxide monohydrate (LiOH•H₂O) and 60.9g of powdery tungsten oxide (WOs) with each other, and they were subjected to calcination under a decarbonated atmosphere at 200°C for 5 hours to prepare Li₄WO₅ powder.

### [Mixing step]

The precursor compound A, lithium carbonate (Li₂CO₃), and the Li₄WO₅ powder were weighed so that a proportion (molar ratio) of Li to the total amount of Ni, Co, and Mn was adjusted to Li/(Ni + Co + Mn) = 1.05 and a proportion (molar ratio) of W to the total amount of Ni, Co, and Mn was adjusted to W/(Ni + Co + Mn) = 0.005, and they were put into the spraying/mixing machine. The total weight of the precursor compound A, lithium carbonate, and the Li₄WO₅ powder was 3584g. Subsequently, they were mixed with each other in the spraying/mixing machine over a period of 10 minutes to give a mixture. The moisture amount in the mixture was measured and found to be 0.48wt%.

### [Calcination step]

The mixture in the spraying/mixing machine was randomly collected at five points. Collected mixtures were subjected to calcination under an atmosphere at a maximum temperature of 950°C for 5 hours to obtain positive electrode active materials R1 to R5.

### [Evaluation of uniformity of Spraying compound]

As to each of the obtained positive electrode active materials R1 to R5, "[W/(Ni + Co + Mn)] (molar ratio)" was measured in the same manner as in Example 1, and each value obtained by multiplying the measured "[W/(Ni + Co + Mn)] (molar ratio)" by 100 was evaluated as each of values "Spraying compound/Me (mol%)" 1 to 5. The standard deviation of "Spraying compound/Me (mol%)" was calculated by using these values "Spraying compound/Me (mol%)" 1 to 5. Although "uniformity of Spraying compound" and "Spraying compound/Me (mol%)" should be "uniformity of Mixing compound" and "Mixing compound/Me (mol%)", respectively, in the present Comparative Example 3, these expressions "uniformity of Spraying compound" and "Spraying compound/Me (mol%)" are used for convenience.

In Table 1 and Table 2, there are shown: conditions for producing each positive electrode active material in Examples 1 to 15 and Comparative Examples 1 to 3; the average secondary particle diameter (µm) of each precursor compound; the moisture amount (wt%) in each sprayed material (Examples 1 to 15 and Comparative Examples 1 to 2) or the mixture (Comparative Example 3); the values "Spraying compound/Me (mol%)" 1 to 5; the standard deviation of "Spraying compound/Me (mol%)"; and the results as to the evaluation of uniformity of the spraying compound.

Criteria for the evaluation of uniformity of the spraying compound are as follows.
(E): The standard deviation is less than 0.02mol% (Excellent).
(I): The standard deviation is 0.02mol% or more (Inferior).

In accordance with the above method, there was confirmed the presence or absence of different phases in each positive electrode active material obtained in Examples 1 to 15 and Comparative Examples 1 to 3. As a result, there were no different phases in every positive electrode active material.

**[Table 1]**

| | Process Flow | Spraying agent Mixing powder | Amount of elemental spraying agent (wt%) | Maximum temperature of sprayed material (°C) | Internal degree of vacuum of spraying/mixing machine in which sprayed material is present (kPa) | Average secondary particle diameter of precursor compound (µm) | Moisture amount in sprayed material or mixture (wt%) |
|---|---|---|---|---|---|---|---|
| Ex. 1 | Flow α | Li₄WO₅ aqueous solution | 10 | 90 | -70 | 4.9 | 0.47 |
| Ex. 2 | Flow β | Li₄WO₅ aqueous solution | 10 | 90 | -70 | 4.9 | 0.45 |
| Ex. 3 | Flow γ | Li₄WO₅ aqueous solution | 10 | 90 | -70 | 4.9 | 0.46 |
| Ex. 4 | Flow γ | Li₄WO₅ aqueous solution | 10 | 115 | -70 | 4.9 | 0.45 |
| Ex. 5 | Flow γ | Li₄WO₅ aqueous solution | 10 | 80 | -70 | 4.9 | 0.47 |
| Ex. 6 | Flow γ | Li₄WO₅ aqueous solution | 10 | 70 | -70 | 4.9 | 0.47 |
| Ex. 7 | Flow γ | Li₄WO₅ aqueous solution | 10 | 60 | -70 | 4.9 | 0.48 |
| Ex. 8 | Flow γ | aqueous solution | 10 | 90 | -90 | 4.9 | 0.46 |
| Ex. 9 | Flow γ | Li₄WO₅ aqueous solution | 10 | 90 | -40 | 4.9 | 0.45 |
| Ex. 10 | Flow γ | Li₄WO₅ aqueous solution | 10 | 90 | 0 | 4.9 | 0.47 |
| Ex. 11 | Flow | Li₂WO₄ aqueous solution | 10 | 90 | -70 | 4.9 | 0.49 |
| Ex. 12 | Flow γ | ZrO₂ suspension | 8 | 90 | -70 | 4.9 | 0.49 |
| Ex. 13 | Flow γ | Li₄WO₅ aqueous solution | 22 | 90 | -70 | 4.9 | 0.45 |
| Ex. 14 | Flow γ | ZrO₂ suspension | 34 | 90 | -70 | 4.9 | 0.48 |
| Ex. 15 | Flow γ | Li₄WO₅ aqueous solution | 10 | 90 | -70 | 3.0 | 0.97 |
| Com. Ex. 1 | Flow δ | aqueous solution | 10 | 90 | -70 | 4.9 | 0.46 |
| Com. Ex. 2 | Flow ε | aqueous solution | 10 | 90 | -70 | 4.9 | 0.47 |
| Com. Ex. 3 | Flow ζ | Li₄WO₅ powder | - | - | - | 4.9 | 0.48 |

**[Table 2]**

| | Spraying /mixing time (min.) | Mixing time (min.) | Spraying time (min.) | Drying time (min.) | Total treatment time (min.) | "Spraing compound/Me (mol%) " "Spraying compound/Me (mol%) | | | | | Standard " deviation of "Spraying compound/Me (mol%)" | Evaluation of uniformity of compound |
|---|---|---|---|---|---|---|---|---|---|---|---|---|
| | | | | | | 1 | 2 | 3 | 4 | 5 | | |
| Ex. 1 | 10 | 0 | 0 | 8 | 18 | 0.499 | 0.505 | 0.509 | 0.497 | 0.501 | 0.005 | (E) |
| Ex. 2 | 10 | 0 | 0 | 6 | 16 | 0.501 | 0.506 | 0.500 | 0.495 | 0.490 | 0.006 | (E) |
| Ex. 3 | 10 | 0 | 0 | 4 | 14 | 0.500 | 0.511 | 0.510 | 0.502 | 0.488 | 0.010 | (E) |
| Ex. 4 | 10 | 0 | 0 | 4 | 14 | 0.508 | 0.502 | 0.496 | 0.500 | 0.486 | 0.008 | (E) |
| Ex. 5 | 10 | 0 | 0 | 6 | 16 | 0.499 | 0.488 | 0.506 | 0.509 | 0.524 | 0.014 | (E) |
| Ex. 6 | 10 | 0 | 0 | 8 | 18 | 0.486 | 0.489 | 0.487 | 0.500 | 0.496 | 0.006 | (E) |
| Ex. 7 | 10 | 0 | 0 | 13 | 23 | 0.505 | 0.499 | 0.490 | 0.491 | 0.501 | 0.007 | (E) |
| Ex. 8 | 10 | 0 | 0 | 3 | 13 | 0.500 | 0.501 | 0.502 | 0.505 | 0.498 | 0.003 | (E) |
| Ex. 9 | 10 | 0 | 0 | 6 | 16 | 0.486 | 0.500 | 0.511 | 0.505 | 0.507 | 0.010 | (E) |
| Ex. 10 | 10 | 0 | 0 | 11 | 21 | 0.496 | 0.500 | 0.522 | 0.504 | 0.495 | 0.011 | (E) |
| Ex. 11 | 10 | 0 | 0 | 5 | 15 | 0.579 | 0.565 | 0.567 | 0.570 | 0.570 | 0.005 | (E) |
| Ex. 12 | 10 | 0 | 0 | 5 | 15 | 0.499 | 0.501 | 0.496 | 0.506 | 0.486 | 0.007 | (E) |
| Ex. 13 | 10 | 0 | 0 | 2 | 12 | 0.521 | 0.501 | 0.502 | 0.486 | 0.516 | 0.014 | (E) |
| Ex. 14 | 10 | 0 | 0 | 1 | 11 | 0.487 | 0.499 | 0.498 | 0.511 | 0.534 | 0.018 | (E) |
| Ex. 15 | 10 | 0 | 0 | 4 | 14 | 0.497 | 0.501 | 0.502 | 0.517 | 0.492 | 0.009 | (E) |
| Com. Ex. 1 | 0 | 10 | 10 | 7 | 27 | 0.505 | 0.500 | 0.506 | 0.511 | 0.499 | 0.005 | (E) |
| Com. Ex. 2 | 0 | 10 | 10 | 4 | 24 | 0.512 | 0.505 | 0.508 | 0.509 | 0.515 | 0.004 | (E) |
| Com. Ex. 3 | 0 | 10 | - | - | 10 | 0.488 | 0.462 | 0.509 | 0.525 | 0.558 | 0.036 | (I) |

As shown in Table 1 and Table 2, the total treatment time was shorter and the positive electrode active material could be efficiently produced in Examples 1 to 15 adopting the flow α, β, or γ in accordance with the production method of the present invention, wherein the spraying/mixing step was performed, in comparison with Comparative Examples 1 to 2 adopting the flow δ or ε in accordance with a conventional method, wherein the mixing step and the spraying step were separated from each other.

The total treatment time was shorter and the positive electrode active material could be more efficiently produced in Example 2 adopting the flow β wherein heating was performed in the spraying/mixing step, in comparison with Example 1 adopting the flow α wherein heating was not performed in the spraying/mixing step. The positive electrode active material could be furthermore efficiently produced in Examples 3 to 4 adopting the flow γ wherein the spraying/mixing step and the drying step were performed under reduced pressure with heating, in comparison with Example 2.

The total treatment time was shorter because of shorter drying time and the positive electrode active material could be more efficiently produced in Examples 3, 8, and 9 adopting the flow γ wherein the internal degree of vacuum of the spraying/mixing machine in which the sprayed material was present was set to below OkPa, in comparison with Example 10 adopting the flow γ wherein the internal degree of vacuum of the spraying/mixing machine was set to 0kPa. Furthermore, in the order of Examples 8, 3, and 9 having a higher internal degree of vacuum, the drying time could be shorter.

Excellent production efficiency was exhibited also in Example 12 adopting the flow γ wherein the ZrO₂ suspension was used as the spraying agent, equivalent to Example 3 adopting the flow γ wherein the Li₄WO₅ aqueous solution was used as the spraying agent and Example 11 adopting the flow γ wherein the Li₂WO₄ aqueous solution was used as the spraying agent.

It was confirmed that the spraying compound was excellent in uniformity also in Example 13 wherein the amount of the elemental compound in the spraying agent was 22wt% and in Example 14 wherein the amount was 34wt%, like in Examples 3 and 12. Also it was confirmed that the total treatment time was more shorter and the positive electrode active material could be more efficiently produced in Examples 13 and 14, in comparison with Example 1.

It was confirmed that the spraying compound was excellent in uniformity also in Example 15 wherein the average secondary particle diameter of the precursor compound was 3.0µm, like in Example 3 wherein the average secondary particle diameter of the precursor compound was 4.9µm. Also it was confirmed that the total treatment time was more shorter and the positive electrode active material could be more efficiently produced in Example 15, in comparison with Example 1.

As shown in Table 1 and Table 2, the spraying compound was inferior in uniformity because of considerably large standard deviation of "Spraying compound/Me (mol%)" in Comparative Example 3 adopting the flow ζ in accordance with a conventional method, wherein the precursor compound and the lithium compound were mixed with the W compound. On the other hand, the spraying compound was excellent in uniformity because of small standard deviation of "Spraying compound/Me (mol%)" in Examples 1 to 15 adopting the flow α, β, or γ in accordance with the production method of the present invention, wherein was performed the spraying/mixing step of spraying the spraying agent containing the W compound or the Zr compound onto the mixture of the precursor compound with the lithium compound.

### INDUSTRIAL APPLICABILITY

The positive electrode active material produced by the production method of the present invention can improve battery properties of non-aqueous electrolyte secondary batteries rather than adversely affects them, and therefore, it is suitable as a positive electrode active material for non-aqueous electrolyte secondary batteries.

## Claims

1. A method for producing a positive electrode active material for non-aqueous electrolyte secondary batteries, comprising at least
a spraying/mixing step of:
mixing a precursor compound of the positive electrode active material with a lithium compound to prepare a mixture; and
simultaneously spraying a spraying agent containing at least one element onto the mixture.

2. The method according to claim 1, wherein
an internal pressure of a vessel in which at least one of the mixture and a sprayed material obtained by spraying the spraying agent onto the mixture is present is lower than an atmospheric pressure, in the spraying/mixing step.

3. The method according to claim 1 or 2, further comprising
a drying step of drying a sprayed material obtained by spraying the spraying agent onto the mixture, after the spraying/mixing step.

4. The method according to claim 3, wherein
heating is performed so that a maximum temperature of the sprayed material is 40°C to 150°C, in at least one of the spraying/mixing step and the drying step.

5. The method according to any one of claims 1 to 4, wherein
the element is contained in a form of a compound of the element in the spraying agent and
an amount of the compound in the spraying agent is 8wt% to 35wt%.

6. The method according to any one of claims 1 to 5, wherein
the precursor compound contains at least nickel (Ni) and has an average secondary particle diameter of 5.5µm or less.

7. The method according to any one of claims 1 to 6, wherein
the spraying agent is an aqueous solution or a suspension containing at least one element selected from tungsten (W), zirconium (Zr), niobium (Nb), boron (B), phosphorus (P), and molybdenum (Mo).

8. The method according to any one of claims 1 to 7, wherein
the spraying agent is an aqueous solution containing tungsten (W).
